# EUROPEAN PATENT SPECIFICATION

(11) **EP 1 048 142 B1**
(45) Date of publication and mention of the grant of the patent: **14.04.2004**
(21) Application number: 99903648.6
(22) Date of filing: 14.01.1999
(51) Int. Cl.: H04L 9/08

(54) **KEY MANAGEMENT SYSTEM**
SCHLÜSSELVERWALTUNGSSYSTEM
SYSTEME DE GESTION DE CLE

(30) Priority: 16.01.1998 NL 1008044
(43) Date of publication of application: 02.11.2000
(73) Proprietor: Koninklijke KPN N.V., 9726 AE Groningen (NL)
(72) Inventor: QUAK, Jacobus, Theodorus, Willem, NL-3583 TN Utrecht (NL); SHEEDY, Eoghan, Colm, Cathal, Dublin 15 (IE)
(74) Representative: Wuyts, Koenraad Maria
(86) International application number: PCT/EP1999/000299
(87) International publication number: WO 1999/037053

(56) References cited:
- EP-A- 0 535 863
- WO-A-97/18655
- WO-A-97/31450
- SANTOSH CHOKHANI: "TOWARD A NATINAL PUBLIC KEY INFRASTRUCTURE" IEEE COMMUNICATIONS MAGAZINE, vol. 32, no. 9, 1 September 1994, pages 70-74, XP000476557 NEW YORK (US)

## Description

### BACKGROUND OF THE INVENTION

The invention relates to a management system for cryptographic keys. For the purpose of protecting electronic communication, there are two cryptographic techniques: secret-key (SK) systems working with pairs of identical, secret keys (codes) and public/private-key (PrPuK) systems working with pairs of associated, non-identical keys. PrPuK systems are used especially when the communication partners do not know one another beforehand, such as with large groups of users.

In PrPuK systems, each user has a private ("secret") key (PrK) and an associated public key (PuK). PuKs of the various users are freely available from, e.g., a "Trusted Third Party" (TTP), incorporated in a TTP server (SV). Basically, the PrK is known only to the user. Suppose that a user A and a user B are registered with a server SV1. User A has a private key - PrKa - while his public key - PuKa - is stored in the server SV1. User B also has a private key - PrKb - while his public key is also stored in the server SV1. The private keys, too, may be guarded in the server, with a view to backup for the user, continuity considerations in a company environment, or on account of legal obligations. The server makes available certificates of the public user keys - PuKa, PuKb etc. A copy of a PrK is made available only to the user whose property said PrK is, e.g., in the event that the user has lost his PrK.

It is conceivable that under specific, legally determined circumstances it is permitted for a (governmental) security organisation to retrieve, with the TTP of an enciphered text, the deciphered version; in that case, the TTP makes use of a stored PrK. A third case arises when an employee parts with his company and leaves behind enciphered texts. The copy of the PrK present in the server then enables the company to decipher said texts.

A request by a user A to be provided with the PuK of a specific user B is honoured by the TTP server by transmission of a certificate of the required PuK - PuKb. Said certificate comprises the PuK of the user, provided with a digital signature, making use of the PrK of the server; hereinafter, such key certificates are represented by: {PuKa}PrKsv1, {PuKb}PrKsv1 etc., where PrKsv1 represents the private key of server SV1. The digital signature which, for the sake of authentication of the sender, is added to a message, is formed by enciphering, using the PrK of the sender, the "plain text" of the message proper or, which is generally preferred in view of the processing speed, by enciphering a (binary) summary of said message, called "hash" or "digest" (for the production thereof, there are standard algorithms known from literature). Using the public key of the sender, the receiver of a message deciphers the enciphered "plain text" or "hash" serving as signature. If the result is OK, the message obviously originates from the owner of said public key ― the supposed sender. Perhaps superfluously: if a message must be transmitted in enciphered form, it is enciphered using the public key of the receiver, who is then capable of deciphering the message using his own private key. An electronic signature added to a message (whether enciphered or not) consists of a copy or binary summary of said message ("hash"), enciphered using the private key of the sender; the receiver then deciphers the electronic signature using the public key of the sender.

In the described manner, users may dispose of PuKs certified using the digital signature of the TTP server, as a result of which the integrity of the transmitted PuK is guaranteed. Using the public key of the server - PuKsv1 - which is made available to each user registered with the SV1, e.g., user A may extract PuKb from the key certificate {PuKb}PrKsv1 received: PuKb={{PuKb}PrKsv1}PuKsv1, in order subsequently to be capable of enciphering, using PuKb, a message to be transmitted to user B. Said enciphered message may then be deciphered (only) by user B using his PrK - PrKb.

In a TTP system as described hereinabove, users therefore receive key certificates which are certified for authenticity (authenticated) using the PrK of the TTP server, also called Certification Authority - CA. These arises a problem if at a specific moment the PrK of the CA becomes compromised or unusable. The result is that, from then on, the CA is incapable of giving off (reliable) key certificates. The users of the TTP server must be―reliably―informed thereof. In addition, there must also be transmitted to the users a new PuK, derived from a PrK freshly generated in the TTP server. The problem is that said information cannot be transmitted reliably if, in doing so, the old PrK of the CA is used for manufacturing an electronic signature.

The international application WO 99/37053 discloses a method for replacing the public key part of a public key / private key pair of a central trusted authority in cases that the private key part of the pair is compromised. The method comprises firstly the distribution (in-band channel) of an emergency message indicating that its private key part is compromised, which message contains a replacement public key part of a new public key / private key pair and a signature using the private key part of the compromised key pair, and secondly the simultaneous publishing in an out-of-band channel a value V which is derived from the emergency message. The second part of the method is to certify that the emergency message originates at the central trusted authority. Such a method has the disadvantages firstly that it needs an additional distribution channel (i.c. the out-of-band channel), and secondly that the method combines unnecessary in a simultaneous action the distribution of the emergency message, the key replacement and the certification of origin.

### SUMMARY OF THE INVENTION

The present invention provides for a system for overcoming the problem stated hereinabove, namely, reliably transmitting to users a message that the PrK of the CA (TTP server) has become compromised without using an additional distribution channel.

To this end a key management system according to the preamble of claim 1, of a kind known from the international application WO 99/37053, has according to the invention the characteristics of claim 1. The invention assumes that not only the PuKs of the users are stored in the TTP server, but the PrKs as well. According to the invention, use is made of said user PrKs stored in the TTP server by transmitting, after the PuK of the TTP has become compromised, to each user whose own key PrK is not known as having been compromised, an (electronic) message which, instead of with the PrK of the TTP, has been authenticated with the private key (PrK) of said user. As already indicated, said authentication is done by enciphering the message itself, or a code ("hash", "digest") derived from the message in a standard way. Please take note of tha fact that normally a message to a user is not enciphered with the PrK but with the PuK of the user.

The new PuK of the TTP may be transmitted to the user in an identical manner. Each user may decipher the information thus received from the TTP server using his own PuK, and therefore knows for sure that, since only the TTP possesses a copy of the user's PrK, the message originates from the TTP; this also applies to the TTP PuK transmitted in the same manner.

The software of the users preferably comprises a module which detects whether a message received, in this case from the TTP server, was enciphered or authenticated with the PrK of the user. If the module so detects, the users' software must modify its settings with respect to the PuK of the TTP.

### EXEMPLARY EMBODIMENTS

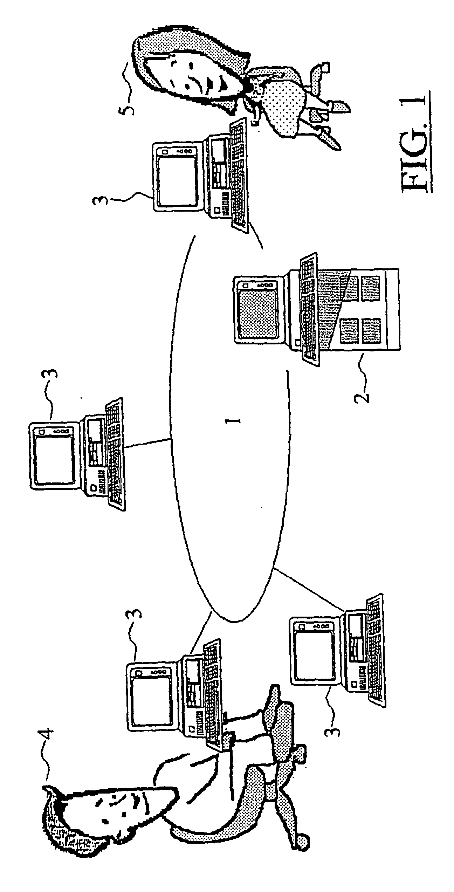

FIG. 1 shows a network 1, a network server 2 which also serves as TTP server, and a number of terminals 3 on which users 4 and 5 have chosen domicile. Messages are exchanged in enciphered form. User 4, who wants to transmit a message (MSG4) to user 5, enciphers said message with the public key of user 5 ― PuK5. Required for enciphering, the PuK of user 5 ― PuK5 ― may be obtained by user 4 by retrieving, with the server 2, a certificate of PuK5; {PuK5}PrK2, where PrK2 is the private key of the server 2. If deciphering {PuK5}PrK2 with the public key of the server―PuK2―is successful, user 4 knows that the key PuK5 indeed originates from server 2.

After the message enciphered with PuK5 ({MSG4}PuK5) has arrived by way of the network 1 at the user 5, the latter (is the only one who) may decipher the message using his private key - PrK5. In a similar manner, user 5 may encipher a message (MSG5) with the public key PuK4 of user 4, derived from a certificate received from server 2 ({PuK}PrK2). The enciphered message ({MSGS}PuK4) may be deciphered by user 4 using his PrK - PrK4. The users' software in the terminals 3 preferably comprises a module for retrieving from the server 2, upon transmission of a message, the certificate of the current PuK of the adressee, for calculating the PuK of the adressee therefrom, for enciphering the message with said calculated PuK, and for transmitting the enciphered message.

If, due to any cause, the PrK of server 2 - PrK2 - is no longer reliable or usable, the latter can no longer be used for sender authentication ("electronic signature") upon transmission of public keys from the server to the users. Secure transmission may be guaranteed only after a new PrK2 has been generated with the server 2 and after the associated PuK2 has been distributed among the users. Said distribution should also be done securely. In doing so, however, the old combination of PrK2 and PuK2 can no longer be used since, after all, the PrK2 has become unreliable or unusable. The combination of the new value of PrK2 - PrK2' - and associated new value for PuK2 - PuK2' - may not be used either, since the users do not yet have PuK2'.

According to the invention, the following is now done. The server 2 transmits a message to each user, enciphered or at any rate authenticated using the PrK of the receiver: for user 4, the message is certified (authenticated) using PrK4, for user 5 using PrK5. User 4 may decipher said message using his public key - PuK4 - user 5 using PuK5. Other users, too, might be able to decipher said message, namely, with the public key of user 4, but in this case it does not matter, since the message is at any rate distributed among all users, and the contents are not secret anyway.

In doing so, it is achieved, however, that the message is certified as originating from the server 2; after all, apart from user 4 only server 2 may dispose of PrK4; in this case, PrK4 is therefore used for authentication instead of the compromised PrKs. Similarly, a message is transmitted to user 5, authenticated using PrK5, and in the same manner to each user registered as a network user with server 2. Together with the message transmitted to the users, the new PuK of server 2 - PuK2 ―which is generated simultaneously with the new value for PrK2― is also transmitted to all users. Here, too, it applies that said new value of PuK2 is certified (authenticated) using the PrK of the user.

It is noted that, generally formulated, according to the invention use is made, for authentication purposes, of a circumstance known to the transmitter which is capable, at the receiving end, of being verified for genuineness (authenticity). Hereinabove, it is proposed in normal situations for authentication to make use of the private key of the transmitting party - server 2 - which, by means of the receiving party - user 4 or 5 - may be tested for authenticity. In exceptional situations, use is made not of the private key of the server 2 but of the private key of the user, which may also be tested for authenticity by the user (each user separately). In general, use may also be made of another circumstance which is present at the end of the server 2, is not public, and may be tested for authenticity by the users. It is of importance here that the circumstance is not known publicly, but only "bilaterally" (only to the server and one user). It is therefore also possible, instead of the private key of the user, to use another circumstance. Such a circumstance may be entered into the server and the users' terminal in advance, especially for the purpose described hereinabove, namely, reliable communication between the server and the users in the event that the private key of the server becomes compromised. The server 2 may generate, e.g., a unique (secret) terminal code for each separate terminal 3 which, enciphered with a public terminal key (PuK3), is transmitted to the terminal and stored there, after having been deciphered (by the terminal) with the private key (PrK3) of said terminal. When PrK2 becomes compromised, the message to that effect and the value of the new public server key may be enciphered with the secret terminal code stored in the server. On the side of the terminal, the message and the new value for PuK2 may be deciphered with the same secret terminal code which, after all, is also stored in the terminal. The secret terminal code stored in both the server and the terminal, therefore, functions as secret key within an (ad hoc) SK system between the server and the terminal.

It is further noted that, where hereinabove use is made of the PrK and PuK, respectively, of the user (which the user enters into the terminal by way of a personal token or smart card or in another way, as a result of which they reside in the terminal for a shorter or longer period of time), it is also possible to use a PrK or PuK, respectively, of the terminal itself (which basically resides in the terminal permanently) in a similar manner.

## Claims

1. Management system for cryptographic keys for a communication network (1) connecting a server (2) and a number of user terminals (3) on which users (4,5) may choose domicile for network communication, the server comprising means for storing and issuing cryptographic keys, namely, for each user or terminal a private key (PrK) and an associated public key (PuK), the management system itself also having its own private key and associated public key, which are normally used for certifying for authenticity the messages and/or cryptographic keys to be transmitted from the server to the users, **characterised in that** the server (2) comprises means for, under circumstances in which the private key of the management system itself is compromised or otherwise unusable, transmitting to each user (4, 5) a message, the user having means for certifying said message for authenticity using the private key and the public key of the user or terminal, the private key of the user being stored in the server and the public key of the user being stored in the terminal or with the user.

2. The management system of claim 1, **characterised in that** said message is transmitted to the users (3) if the private key and the public key of the server (2) have been replaced by a new private and public key, and that the message comprises a copy of the new public key of the server.

3. The management system of claim 2, **characterised in that** the terminals comprise means for storing the private key of the user (4, 5) or terminal (3) and a copy of the public key of the server (2), as well as means for detecting messages which are certified using a key, equal to said private key, as well as means for detecting, in a message so certified, a copy of the new public key of the server, and for replacing the stored copy of the old public key with the copy of the new key of the server detected in the message.

## Patentansprüche

1. Verwaltungssystem für kryptographische Schlüssel für ein Kommunikationsnetzwerk (1), welches einen Server (2) und eine Anzahl von Benutzerendgeräten (3) verbindet, auf denen Benutzer (4,5) ihren Sitz für die Netzwerkkommunikation einnehmen können, wobei der Server Mittel zum Speichern und Ausgeben von kryptographischen Schlüsseln umfasst, insbesondere für jeden Benutzer oder Endgerät einen privaten Schlüssel (PrK) und einen zugeordneten öffentlichen Schlüssel (PuK), wobei das Verwaltungssystem selber seinen eigenen privaten Schlüssel und einen zugeordneten öffentlichen Schlüssel aufweist, die normalerweise benutzt werden, um die Authentizität der Nachrichten und/oder der kryptographischen Schlüssel, die von dem Server an die Benutzer zu senden sind, zu zertifizieren, **dadurch gekennzeichnet, dass** der Server (2) Mittel umfasst, um unter Umständen, in denen der private Schlüssel des Verwaltungssystems selbst kompromittiert oder andersseitig unbrauchbar geworden ist, an jeden Benutzer (4,5) eine Nachricht zu übermitteln, wobei der Benutzer Mittel hat, um die Authentizität der besagten Nachricht unter Einsatz des privaten Schlüssels und des öffentlichen Schlüssels des Benutzers oder Endgeräts zu zertifizieren, wobei der private Schlüssel des Benutzers auf dem Server gespeichert wird und der öffentliche Schlüssel des Benutzers in dem Endgerät oder beim Benutzer gespeichert wird.

2. Verwaltungssystem nach Anspruch 1, **dadurch gekennzeichnet, dass** die besagte Nachricht an die Benutzer (3) übertragen wird, falls der private Schlüssel und der öffentliche Schlüssel des Servers (2) durch einen neuen privaten und öffentlichen Schlüssel ersetzt worden sind, und dass die Nachricht eine Kopie des neuen öffentlichen Schlüssels des Servers umfasst.

3. Verwaltungssystem nach Anspruch 2, **dadurch gekennzeichnet, dass** die Endgeräte sowohl Mittel zum Speichern des privaten Schlüssels des Benutzers (4,5) oder des Endgerätes (3) und eine Kopie des öffentlichen Schlüssels des Servers (2) als auch Mittel zum Erfassen von Nachrichten, die unter Einsatz eines Schlüssels zertifiziert worden sind, der gleich ist zu dem besagten privaten Schlüssel, als auch Mittel zum Erfassen in einem so zertifizierten Nachrichtentext von einer Kopie des neuen öffentlichen Schlüssels des Servers und zum Ersetzen der gespeicherten Kopie des alten öffentlichen Schlüssels mit der Kopie des neuen Schlüssels des Servers, der in der Nachricht erfasst worden ist, umfassen.

## Revendications

1. Système de gestion de clés cryptographiques pour un réseau de communication (1) reliant un serveur (2) et un certain nombre de terminaux utilisateurs (3) sur lesquels des utilisateurs (4, 5) peuvent élire domicile pour la communication de réseau, le serveur comprenant des moyens permettant de stocker et de délivrer des clés cryptographiques, notamment pour chaque utilisateur ou terminal une clé privée (PrK) et une clé publique associée (PuK), le système de gestion lui-même ayant également sa propre clé privée et une clé publique associée, qui sont normalement utilisées pour certifier l'authenticité des messages et/ou des clés cryptographiques à transmettre du serveur aux utilisateurs, **caractérisé en ce que** le serveur (2) comprend des moyens permettant de transmettre un message à chaque utilisateur (4, 5), dans des circonstances où la clé privée du système de gestion lui-même est remise en cause ou inutilisable pour une raison quelconque, l'utilisateur disposant de moyens permettant de certifier ledit message quant à son authenticité à l'aide de la clé privée et de la clé publique de l'utilisateur ou du terminal, la clé privée de l'utilisateur étant stockée sur le serveur et la clé publique de l'utilisateur étant stockée sur le terminal ou chez l'utilisateur.

2. Système de gestion selon la revendication 1, **caractérisé en ce que** ledit message est transmis aux utilisateurs (3) si la clé privée et la clé publique du serveur (2) ont été remplacées par une nouvelle clé privée et publique, et **en ce que** le message comprend une copie de la nouvelle clé publique du serveur.

3. Système de gestion selon la revendication 2, **caractérisé en ce que** les terminaux comprennent des moyens permettant de stocker la clé privée de l'utilisateur (4, 5) ou du terminal (3) et une copie de la clé publique du serveur (2), ainsi que des moyens pour détecter des messages qui sont certifiés à l'aide d'une clé, égale à ladite clé privée, ainsi que des moyens permettant de détecter, dans un message ainsi certifié, une copie de la nouvelle clé publique du serveur, et de remplacer la copie stockée de l'ancienne clé publique par la copie de la nouvelle clé du serveur détectée dans le message.
